Europäisches Patentamt

European Patent Office

Office européen des brevets

(11) Publication number: **0 371 936**
**A2**

(12) # EUROPEAN PATENT APPLICATION

(21) Application number: 89830530.5

(22) Date of filing: **29.11.89**

(51) Int. Cl.5: **B23Q 39/04, B23Q 3/06, B23D 45/10, B23D 47/04**

(30) Priority: **30.11.88 IT 4861388**

(43) Date of publication of application:
**06.06.90 Bulletin 90/23**

(84) Designated Contracting States:
**AT DE ES FR GB NL**

(71) Applicant: **Lenzi, Mauro**
**Via G. Paganino 2**
**I-56100 Pisa(IT)**

(72) Inventor: **Lenzi, Mauro**
**Via G. Paganino 2**
**I-56100 Pisa(IT)**

(74) Representative: **Massari, Marcello**
**Studio M. Massari S.r.l. 23, Via Fontanella**
**Borghese**
**I-00186 Roma(IT)**

(54) Machine formautomatically cutting to sized length metallic tubular workpieces of toroidal from by exactly positioning each workpiece.

(57) This invention relates to a machine for automatically cutting to sized length metallic tubular workpieces of toroidal fcrm by exactly positioning each piece, and comprising in combination: a revolving turret carrying several holding and locking means including each two piece-holding vices; a magazine containing two piles of workpieces with separator and abuting studs; a workpiece holder for exactly positioning the workpieces of each pile into the vices; two circular-saw cutting devices with vertical cutting blade, and a circular-saw cutting device with horizontal cutting blade; an unloading station for the cut workpiece; means and accessories such as hydraulic and pneumatic means, step-motor means of the turret and motor means of the cutting devices; and a central electronic synchoronization and control unit.

FIG.2

# MACHINE FOR AUTOMATICALLY CUTTING TO SIZED LENGTH METALLIC TUBULAR WORKPIECES OF TOROIDAL FORM BY EXACTLY POSITIONING EACH WORKPIECE

This invention relates to a machine for automatically cutting to sized length metallic tubular workpieces of toroidal form by exactly positioning each piece, and comprising in combination: a revolving turret carrying several holding and locking means including each two piece-holding vices; a magazine containing two piles of workpieces with separator and abuting studs; a workpiece holder for exactly positioning the workpieces of each pile into the vices; two circular-saw cutting de vices with vertical cutting blade, and a circular-saw cutting device with horizontal cutting blade; an unloading station for the cut workpiece; means and accessories such as hydraulic and pneumatic means, step-motor means of the turret and motor means of the cutting devices; and a central electronic synchronization and control unit.

As well known to the skilled in the art, in the construction of 90° elbow unions or 180° constant-radius umbrella handle unions following steps are carried out in succession:

a) cutting the straight pipes in sections of suitable length;

b) warm-bending such sections;

c) edging the end border of the bent pipes to achieve a geometrically symmetrical workpiece, a further cutting of the elbow unions being executed, if necessary; and

d) trimming and protectively treating the finished product.

In such a succession the operations of steps a) and d) are completely automatic and continuously carried out; the operation of step b), although non-continuously practicable, can be however executed at high speed while the operation of step c) is a real "throttling" of the production process.

Such a throttling is caused by the fact that the positioning of the workpieces is carried out manually because of the unevenness of the pipe ends caused during the bending of the pipe providing a section of a cylindrical tore from a coarse hollow cylindrical workpiece.

The present invention seeks to provide an automatic operation of step c) above by taking the coarse workpieces out of two piling up feed magazines, wherein the workpiece is self-positioned and transferred in the right position to the relative locking vice in which the coarse workpieces are firmly retained for the successive cutting operations.

As already mentioned, once the workpieces are locked in the loading station, the vice is displaced by the angular step motor of the turret in the several work stations up to the final unloading station of the machined workpieces. The successive step movement causes the turret to be displaced to the first loading station again, thus completing the working process.

It should be appreciated that due to the construction of the machine the feeding of the coarse workpieces to the magazine, which can be automatically executed by the usual known techniques, even if carried out manually, does not affect the working time and require particular skilfulness either.

This invention will now be described in more detail with reference to the annexed drawings, wherein:

Fig. 1 shows schematically the coarse workpiece to be processed by the machine according to the invention, and the size thereof;

Fig. 2 is a top view of the machine;

Fig. 3 is a schematic view of a vice;

Fig. 3A is a section showing the arrangement of the two jaws of a vice;

Fig. 4 shows a perspective, fragmentary view of the feeding magazine of the coarse workpiece and a holding and positioning device with annexed accessory means;

Fig. 5 is a perspective, fragmentary view showing the holding device which is approaching the coarse workpiece to be held in the feeding magazine;

Fig. 6 is a middle section in the horizontal plane and in enlarged scale of the holding device within a coarse workpiece, which is arranged in ready to be cut condition;

Fig. 7 is a perspective view of the separator of the workpieces piled up in the feeding magazine;

Figs. 8-13 show schematically a perspective view in enlarged scale of the feeding magazine of the coarse workpieces and the displacements of the separator;

Figs. 14-21 are similar fragmentary views showing the positions, the displacements and the functions of a half of the feeding magazine and of the holding device and the vice associated thereto;

Figs. 22 and 23 are similar views showing the cutting operation for trimming the edges of the length bent like an umbrella handle, i.e. 180° unions;

Fig. 24 is a similar view showing the cutting operation of the 180° unions in two symmetrical halves so as to provide 90° unions; and

Figs. 25 and 26 are similar views as Fig. 6 showing an alternative holding device or vice of the coarse workpieces having two positioning members.

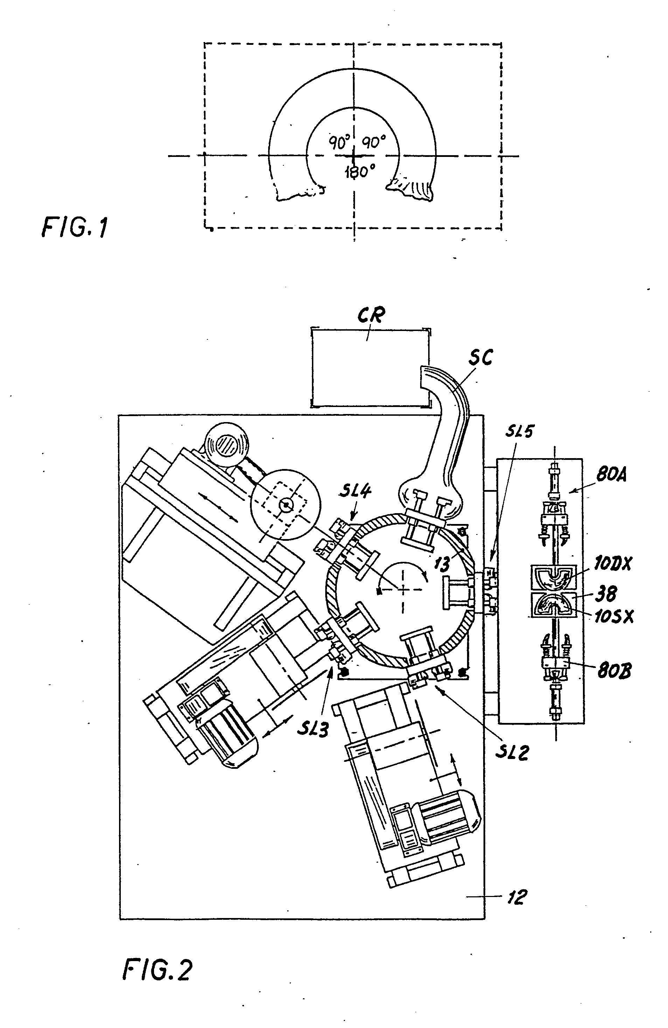

With reference first to Fig. 1 there is shown a coarse workpiece designated by 10 which is processed by the machine according to the invention generally designated by 11 in Fig. 2.

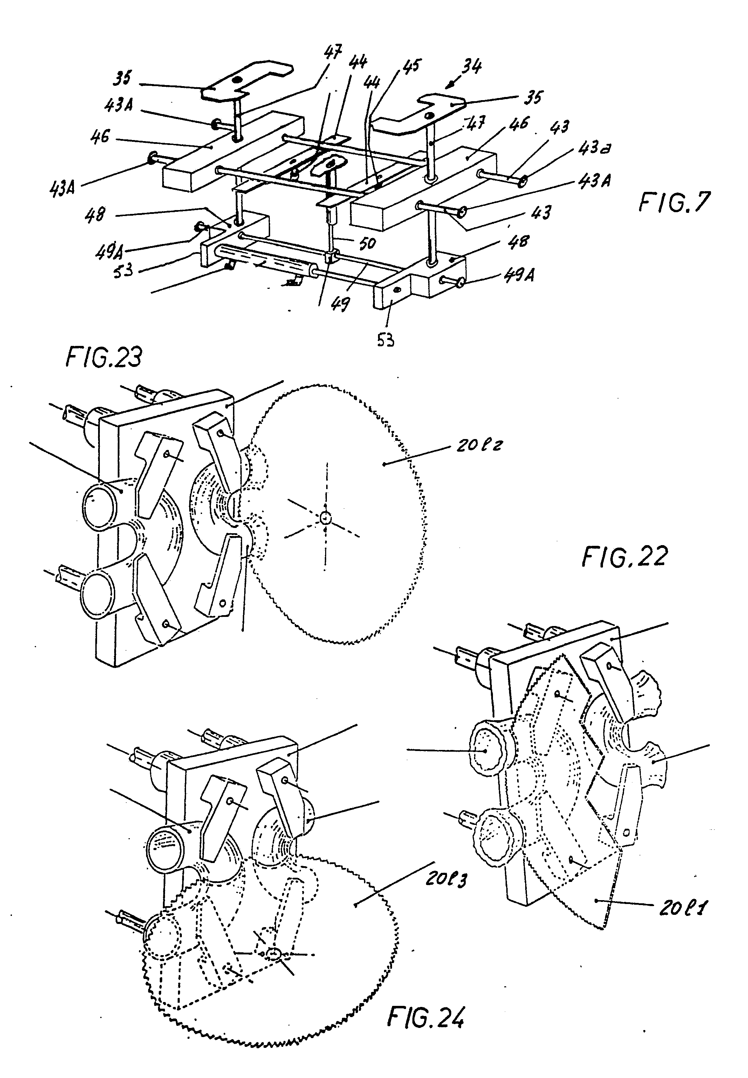

Coarse workpiece 10 is shown in its real aspect after above mentioned steps a) and b). The first machining to be performed is the trimming of edged EE of the socalled "half ring cake" provided from said steps by cutting them along the line CC, the line DD indicating the (eventual) successive cutting operation to provide two 90° "elbow" unions, said operations being illustrated in Figs. 22, 23 and 24, respectively.

It is evident to the skilled in the art that the accuracy factor of such cutting operations should be rather high because of the greatest uniformity requested for such workpieces.

Machine 11 consists essentially of a base 12 carrying a turret 13 rotating by steps of 72° so as to be positioned successively in five different working stations SL1, SL2, SL3, SL4 and SL5.

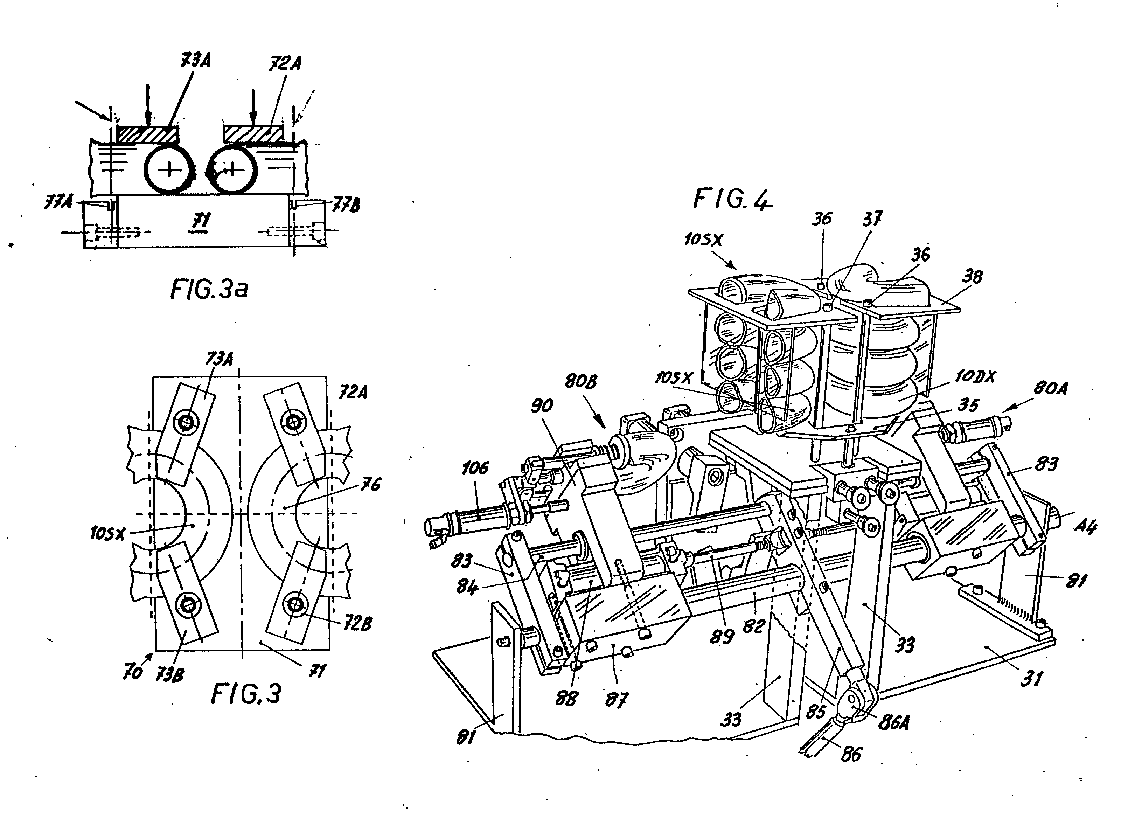

As it will be better apparent in the following description the simultaneous loading of two coarse workpieces located in the vices of turret 13 with mirror-like symmetry is effected in working station SL1, the ends of such workpieces being oriented outwards (Fig. 3).

The cutting of both ends of the coarse workpiece 10Sx on the left-hand side is effected in working station SL2 by the circular blade 20L1, and the cutting of the ends of the course workpiece 10Dx is effected in the next working station SL3 by the circular blade 20L2.

The simultaneous cutting operations of both 180° unions at exactly half a length thereof is effected by the circular blade 20L3 in the next station SL4 so as to provide two 90° elbow unions from each of them.

The unions provided from the preceding processing are expelled to the chute SC and collected in bulk into the container CR in the next station SL5.

The next angular displacement by 72° will carry turret 13 to the following working station SL1 where the loading of two further coarse workpieces is effected.

As far as devices and members of each station are concerned the most complex device is included in station SL1 and consists of an assembly of devices and members holding the coarse workpieces, separating two of them from the relative pile, taking both separated workpieces, and introducing each of them into the relative vice in the right positions so that the following cutting operations are accurately performed to provide unions like either umbrella handles or elbows identical to each other, respectively.

In each working station SL2 and SL3 there is a cutting device having a vertical blade and comprising the disc blades 20L1 and 20L2 which are rotated by electrical motors 21A and 21B through a suitable gear and belt drive designated by 22A and 22B, respectively, each assembly being mounted on its own carriage designated by 23A and 23B, respectively. Each carriage can be moved forward and backward to the radial direction with respect to revolving turret 13 on the underlying worktable 24A, 24b between a retracted position in which the circular cutting blade 20L1 or 20L2 is remote from the turret and an advanced position in which the circular cutting blade cuts one of the coarse workpieces fed by revolving turret 13.

In working station SL4 there is the same assembly as that already described with reference to working stations SL2 and SL3 comprising motor 21C, gear and belt drive 22C, carriage 23C and worktable 24C, with the only difference that the whole assembly is arranged so that disc blade 20L3 performs the cutting operation along a horizontal line and on both coarse workpieces fed thereto.

As far as turret 13 is concerned, it consists of a drum carrying on its outer surface five hydraulically driven vices equal to one another designated by 70, 70A, 70B, 70C and 70D in Fig. 2.

Since such vices are identical to one another both as construction and operation, only one of them will be described, for example vice 70, with reference to Figs. 3, 3a and 18 to 20.

Vice 70 comprises a table or clamping plate 71 fastened to the outer surface of turret 13 and two pairs of jaws 72A, 72B and 73A, 73B, the rods 74-(A, B) and 75(A, B) of which pass through the plate and the sleeves 78(A, B) and 79(A, B) and are connected to the double-acting hydraulic cylinder and piston drive assembly 54(A, B) of plate 79(C, D) (Fig. 15).

Pneumatic assembly 54(A, B) operates between the inner surface of plate 71 and the respective plate 79C and causes jaws 72A, 72B to be opened and closed against plate 71.

At the middle of plate 71 a shallow cavity 77 is formed and two further recesses 77(A, B) are provided along the two sides of greater length of the plate (Figs. 3 and 3A).

The vice which is brought in engagement in working station SL1 operates together with the magazine, generally designated by 30 and containing the workpieces 10 piled up on one another (Figs. 2, 4, 7 to 13), and with both holding devices 80A, 80B engaging the coarse workpieces and transferring them to vice 70, said members and devices being supported by an auxiliary bench or worktable 31.

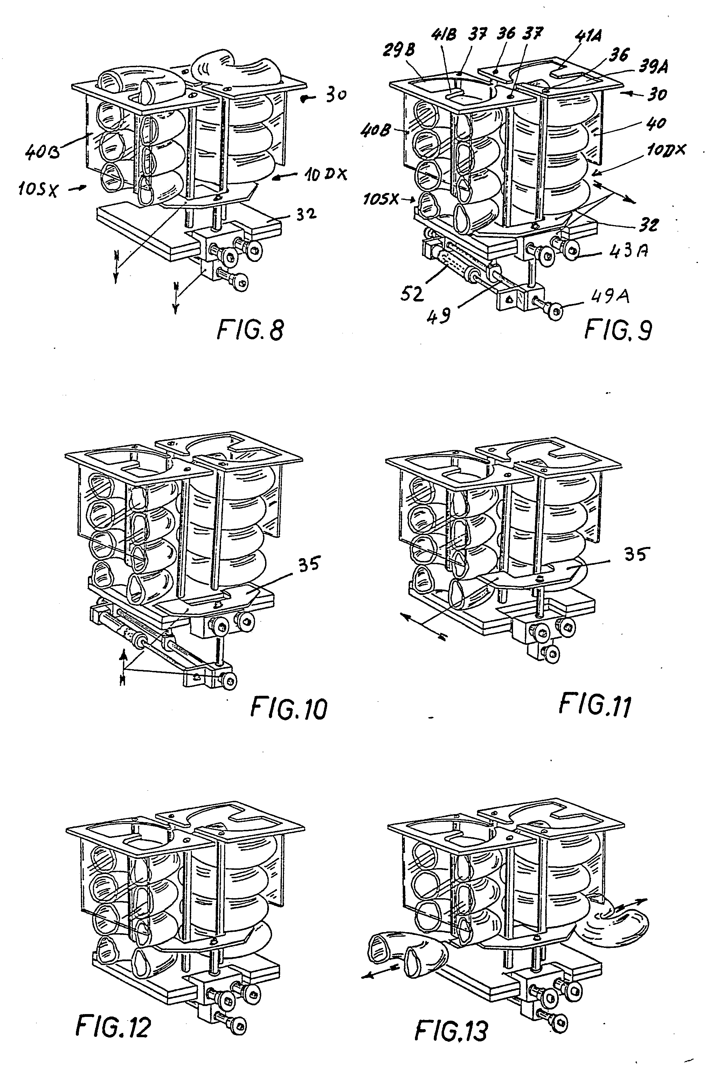

Magazine 30 connected to worktable 12 of the machine (Figs. 4, 7) comprises a base plate 32 supported by posts 33 and anchoring the drive and supporting assembly 34 (Fig. 7) provided with brackets 35 supporting the piled up coarse workpieces 10, two pairs of uprights 36, 37, un upper plate 38 formed with two openings 39A, 39B having the form of the coarse workpieces, and two sheets or plates 40A, 40B hanging from the upper plate 38 up to about half the diameter of the lowest coarse workpiece 10 of the pile.

Furthermore, at the end of each tab 41A, 41B of the upper plate 38 forming the central portion providing the form of an umbrella handle of the openings 39A, 39B a vertical rod 42A, 42B is attached, the lower end of which reaches the lower edge of sheets 40(A, B). With such an arrangement each rod 42(A, B) is located in the concavity of the coarse workpieces piled up in two parallel piles in magazine 30.

As it will be apparent, between upper plate 38 and moving brackets 35 in the upper positions the two pairs of uprights 36, 37 together with both rods 42A, 42B and both sheets 40A, 40B form two "cages" firmly holding the coarse workpieces 10 in the right positions.

Brackets 35 are moving both vertically with respect to the base plate 32 and horizontally so as to approach or separate from each other, and cooperate so as to put down on base plate 32 the lower coarse workpiece of each pile and then, after being opened, having gone up again and being closed, to separate such a coarse workpiece from the pile of overlying workpieces in order to facilitate the engagement of the workpiece by the holding devices 80A, 80B.

To this end the brackets are operated, as already mentioned, by the drive and supporting assembly 34 located beneath base plate 32 and comprising two horizontal cylindrical rods 43 firmly connected to plate 32 by means of bars 44 and screws 45. On the guide rods 43 two carriages 46 are sliding with a stroke limited by plate 32 inside magazine 30 and by heads 43A of rods 43 outside said magazine. Carriages 46 have each a vertical central hole in which a respective vertical rod 47 is received, the upper end of which supports the respective bracket 35, and the lower end of which is fastened to a respective lower carriage 48. The lower carriages 48 are in turn slideable on a horizontal rod 49 connected to the lower end of the rod 50 of a pneumatic double-acting cylinder and piston assembly 51 mounted vertically and fastened to the lower surface of base plate 32, the outward stroke of such carriages being stopped by the heads 49A of rod 49.

A second pneumatic double-acting cylinder and piston assembly 52 operates between carriages 48 and is fastened to both tabs 53 thereof so as to cause, by its extension and retraction, said carriages to slide on rod 49 and then through vertical rods 47 carriages 46 to slide on rods 43. In turn pneumatic assembly 51 causes, by its extension and retraction, the horizontal guide rod 49 to approach or separate from base plate 32, thus allowing in the extension phase carriages 48 to be lowered with respect to plate 32 and then causing also the lowering of vertical rods 47 supporting the mobile brackets 35 and determining the lowering of the latter to said plate along with the pile of coarse workpieces.

In other words both piles of coarse workpieces 10Dx and 10Sx will pass from the position of Fig. 8 to that of Fig. 9.

On the other hand the operation of the pneumatic assembly 52 will cause brackets 35 to approach each other or to separate from each other.

Likewise the retraction of assembly 51 will cause brackets 35 to rise from plate 32.

The geometry of the system is such that, when piston 51 is "closed" or retracted, brackets 35 skim the upper side of the coarse workpiece resting on the upper surface of plate 32, and when it is extended, brackets 35 rest on such plate. The geometry of carriages 46 and piston 52 is instead such that, as already mentioned, said carriages are received in the cavity of plate 32 in the retraction stroke and abut against head 43A at the end of guide rods 43 in the extension stroke.

In other words, the transversal stroke is such as to allow the inner ends of brackets 35 to be outside the piled up coarse workpieces, in the extended condition of assembly 52, and to support them firmly with the bear ing on the same brackets 35 in the retracted condition of assembly 52.

This operation is shown in Figs. 8 to 13.

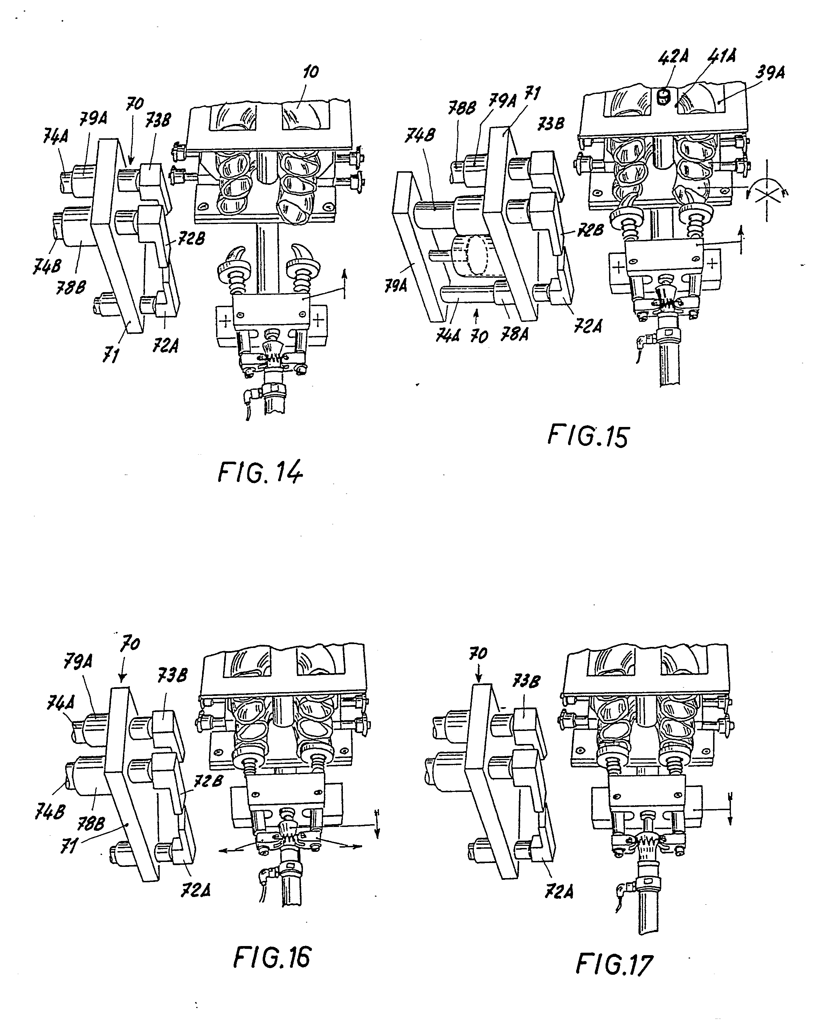

The holding and feeding devices 80A, 80B better shown in Figs. 4, 5, 6 and 14 to 21 engage the coarse workpieces 10Dx, 10Sx resting on base plate 32 and separated from the overlying workpieces by brackets 35 in the retracted condition of Fig. 13.

As such devices are identical to each other only one will be described, and namely that designated by 80B and destined to hold the coarse workpiece 10Sx from the left-hand pile in Figs. 2 and 4.

With reference to Fig. 4, at the end of the auxiliary bench two upright brackets 81 supporting the cylindrical rod 82 are provided so that the latter can rotate about axis A4. Secured to the cylindrical rod 82 are arms 83 supporting a second cylindrical rod 84 and firmly connecting both rods 82 and 84 to each other. Rods 82 and 84 are also firmly connected to one end of arm 85 which at the other end is connected by means of a hinged joint 86A to a cylinder and piston assembly 86, only the end portion of the piston rod thereof being illustrated.

The other end of the cylinder and piston assembly 86 is connected to plate 31 through a bracket and hinged joint (not shown) so that the assembly can be rotated.

A carriage 87 is slideable mounted on rod 82 and is connected to the cylinder of a double-acting cylinder and piston assembly 88, the piston rod 89 of which is connected to the central arm 85.

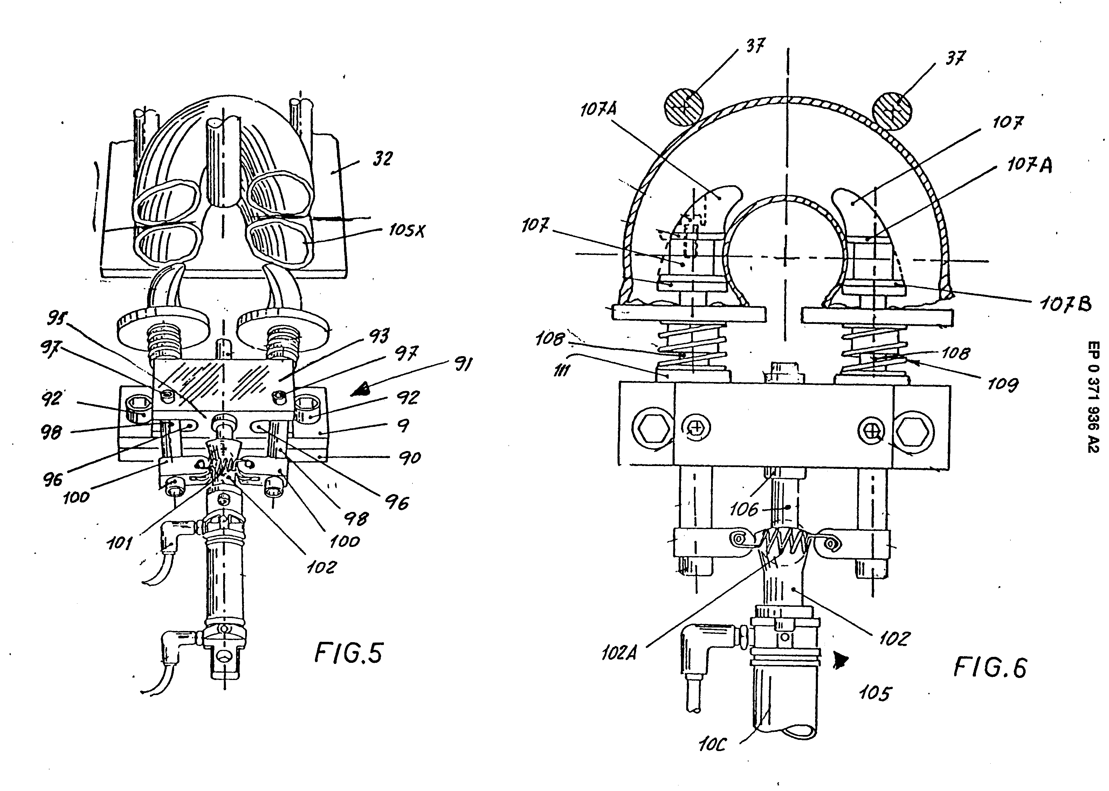

The assembly formed of carriage 87 and cylinder/piston 88, 89 is connected to an arm 90 surrounding cylindrical rod 84 and carrying on its upper surface the device holding the coarse workpiece 10Sx and feeding it to vice 70. To this purpose its upper end (Figs. 5 and 6) consists of a plug-in assembly 91 secured to arm 90 by screws 92 and formed of a lower plate 93 and an upper plate 94 connected by a central member 95 of reduced size so that two grooves 96 directed in opposite direction are formed between the two plates.

Pivoted in each groove 96 about pin 97 is a cylindrical arm 98 carrying at its rear end a bracket 100 the inner end of which has a semi-cylindrical form.

The two brackets 100 are connected to each other by two tension springs 101 at either side of a frusto-conical cam 102 carried by a L-shaped bracket 103 integral with cylinder 104 of a double-acting pneumatic cylinder and piston assembly 105, the piston 106 of which is secured to the end of arm 90 at the central member 95 of plug-in assembly 91.

Carried at the outer end of each cylindrical arm 98 is a member having approximately the form of a feline nail 107 provided with two spaced centering discs 107A and 107B. Below disc 107A there is a cylindrical member 108 about which an elicoidal compression spring 109 and a freely moveable plate 110 are mounted, said spring acting between plate 110 and an annular shoulder 111 supported by the base of the cylindrical member 108.

It is evident that the position of the frusto-conical cam 102 defines through the brackets 100 the position of cylindrical arms 98 by the rotation about pins 97 as either converging downwards like in Fig. 5 or parallel to each other like in Fig. 6.

In the operation, the double-acting cylinder and piston assembly 86, when in its retracted condition, rotates arm 90 about axis A4-A4 and carries nails 107 of arms 98 (Figs. 5, 14) at the openings of the coarse workpiece 10Sx resting on base plate 32.

The successive operation of cylinder and piston assembly 88 (Figs. 4, 15) will feed rightwards carriage 87 and carry nails 107 firstly at the openings of the coarse workpiece 10Sx and secondly into said openings (Fig. 16), plates 110 being in contact with the edges of said openings.

It should be appreciated that the rounded nails 107 acting on the inner curved surface of the coarse workpiece (Fig. 6) contributes to the right positioning thereof performed by plates 110 and uprights 37.

When the components of the machine are in the condition of Fig. 16 the cylinder and piston assembly 105 will be operated and then the enlarged portion 102A of frusto-conical cam 102 will be displaced between the brackets 100 which will separate from each other against the action of sptings 101, thus causing nails 107 to be pressed against the inner portion 15 of workpiece 10Sx (Figs. 6, 17) which is firmly held.

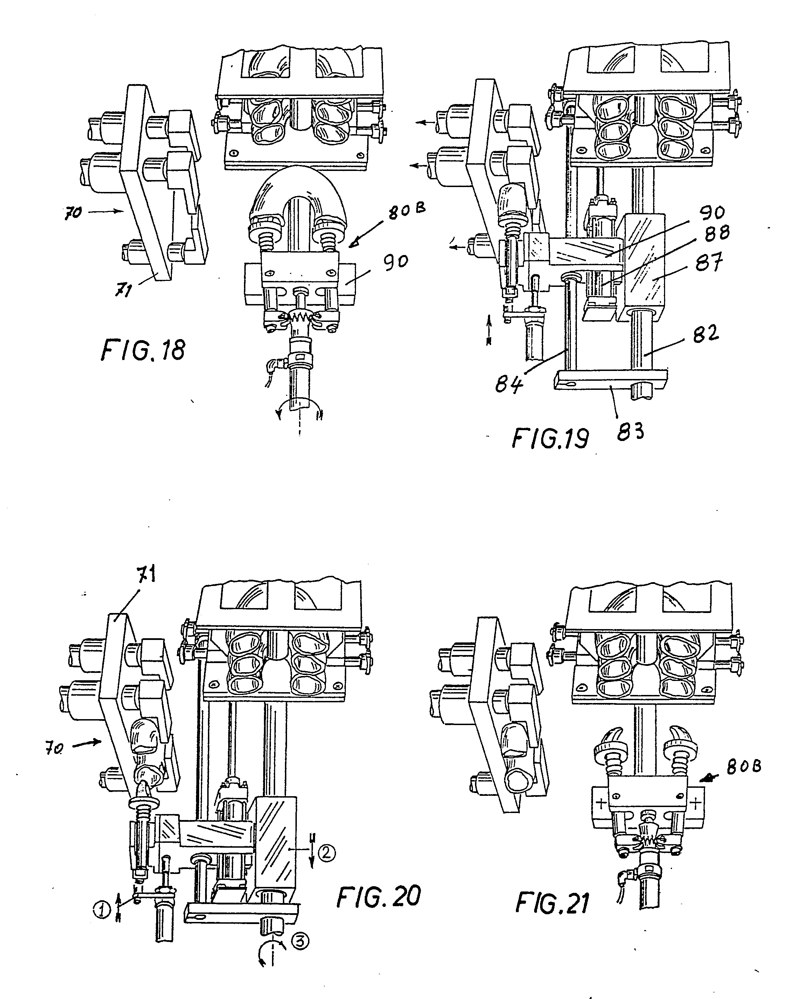

The operation of assembly 88 in the retracted condition will then retract arm 90 and cause coarse workpiece 10Sx to be expelled from magazine 30 (Fig. 18), and the operation of cylinder and piston assembly 86 will cause arm 90 to be rotated through arm 85 counter-clockwise from the piston of Fig. 18 to that of Fig. 9, i.e. near jaws 73A of vice 70.

As it will be apparent, the traverse of carriage 35, the closure of jaws 73 (Fig. 20), the opening of arms 98 will cause the coarse workpiece to be caught in the vice 70 and the holding device 80A to be ready to engage another coarse workpiece due to the simultaneous operation of assembly 86 acting on arm 85.

Of course, an identical, simultaneous operation of the other loading and feeding device 80A will bring the corresponding workpiece 10Dx into engagement with jaws 72A of vice 70.

The rotation of turret 13 by 72° brings vice 70 to station SL2 where blade 20L1 will cut the ends of coarse workpiece 10Sx (Fig. 22) while in the next vice 70A two further workpieces are loaded.

Another rotation of turret 13 will bring vice 70 to working station SL3 in which the end of workpiece 10Dx is cut (Fig. 23), vice 70A to station SL2 in which workpiece 10Sx is cut, and vice 70B to station SL1 in which two further workpieces are loaded.

Another rotation by 72° will bring vice 70 to station SL4 in which the two coarse workpieces 10Dx and 10Sx are cut (if requested) at half a length to provide 90° unions (Fig. 24).

The successive rotation of turret 13 will bring vice 70 to station SL5 where jaws 72A and 73A will open, thus releasing the cut workpieces into the chute SC and then the container CR.

At the same time vice 70A is in station SL4, vice 70B in station SL3, vice 70C in station SL2, and vice 70D in station SL1 where the loading of two coarse workpieces is performed.

At the following rotation by 72° vice 70 will be in station SL1 and the cycle starts again.

It is evident that the operation of vices, saws, brackets 35 in magazine 30, and holding and feeding devices is controlled and synchronized by a control unit which is known and will not be described in more detail.

The automation of the machine according to the invention brings the yield of one worker from about two thousands pieces per shift to more than six thousands. It should be appreciated what advantage in the yield can be provided by this machine, considering that a worker can operate with two machines at a time.

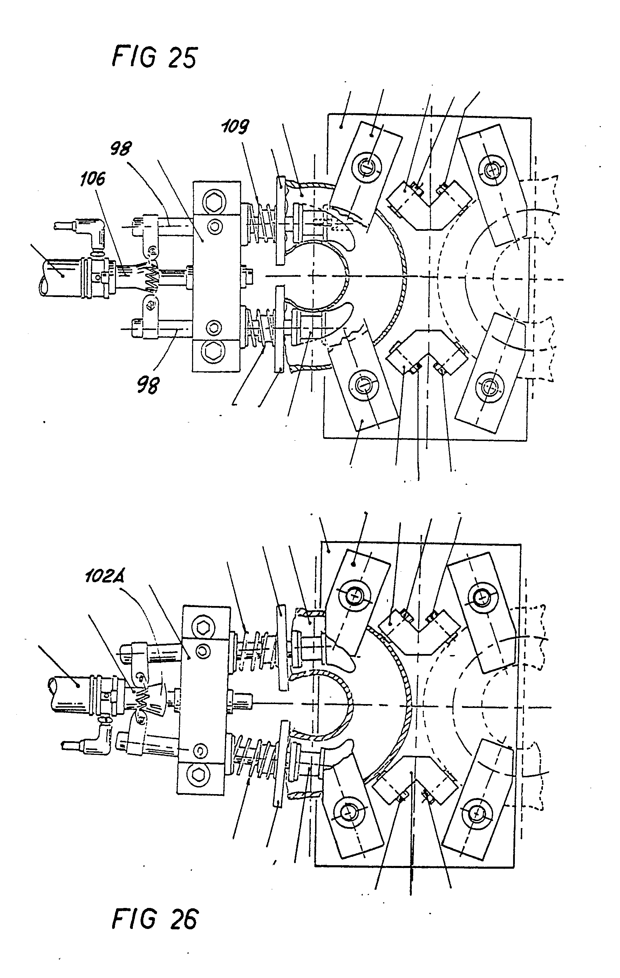

In Figs. 25 and 26 there is shown an alternative embodiment of the vices designated herein by the same numerals increased by 100, in which two V-shaped stop means designated by 190 are mounted on plates 171, against said stop means the coarse workpieces 10 being pushed by springs 109 of arms 98 when the latter are opened from the closed engaging condition of Fig. 25 to the opened releasing condition of Fig. 26.

**Claims**

1. A machine for automatically cutting to sized length metallic tubular workpieces of toroidal form by exactly positioning each piece, and comprising in combination: a main worktable and an auxiliary worktable; a revolving turret placed on said main worktable and carrying several holding and locking means including each two piece-holding vices; several working stations for workpieces carried by said elements; a magazine containing two piles of workpieces with separator and abuting studs carried by said auxiliary worktable; a workpiece holder positioning exactly the workpieces of each pile into the vices and carried by said worktable; two circular-saw cutting devices with cutting blade placed according to a first direction; a circular-saw cutting device with cutting blade placed according to a second direction orthogonal to said first direction; an unloading station for the cut workpiece; means and accessories such as hydraulic and pneumatic means, step-motor means of the turret and motor means of the cutting devices; and a central electronic synchronization and control unit.

2. A cutting machine as defined in claim 1, wherein said turret carryes five holding devices (70) spaced by 72°.

3. A cutting machine as defined in claim 2, wherein each holding device consists of a holding plate (71) and two pairs of jaws (72A, B; 73A, B) the rods of which pass through said plate and are operated by a bar (79A, B) controlled by a double-acting hydraulic assembly (70).

4. A cutting machine as defined in claim 3, wherein said plates (171) are provided with two V-shaped stop means (180).

5. A cutting machine as defined in claim 3, wherein each plate carries a central recesse (76) and two lateral recesses (77A,B) to avoid shocks perpendicular to said first stud.

6. A cutting machine as defined in claim 1, wherein said magazine comprises a base plate (32); an upper plate (38) having two openings of similar form as said coarse workpieces (39A, B); two pairs of uprights (36, 37) connecting said plates; two front sheets (40A, B); two vertical bars (42A, B) hanging from said upper plate (38); and a drive and supporting assembly (34) of said pile of workpieces.

7. A cutting machine as defined in claim 6, wherein said assembly (34) comprises two opposite brackets (35) moveable both vertically and horizontally and acting each on one of said piles of coarse workpieces; a vertical rod (47) supporting each bracket (35); a horizontal guide rod (49) provided with a head (49A); a carriage (48) supporting each rod (47) moving on said horizontal guide rod (49); a horizontal pneumatic assembly (58) driving said carriages (48); a vertical pneumatic assembly (51) secured to said plate (32) and supporting and driving said horizontal guide rod (49); two horizontal guide rods (43) provided with a head (43A) and secured to said base plate (32); two carriages (46) moving horizontally on said rods (43) and formed each with a hole receiving one of said vertical rods (47); said component parts being arranged such that the synchronized operations of said horizontal pneumatic assembly (58) and said vertical pneumatic assembly (51) define the vertical and horizontal movements of said brackets (35).

8. A cutting machine as defined in claim 1, wherein each holding device (80A, B) positioning the workpieces in the respective jaws of the vices comprises a holding assembly (98, 107) of the workpieces (10Dx, 10Sx) moving under control (100-101-102-102A-105) between a workpiece release position ad a workpiece holding position, and a drive and supporting assembly (90) of said holding assembly consisting of means for an angular displacement by 90° (85, 86, 82, 84) between the holding position of the workpiece from said magazine (30) and the introduction position into said vice (70) and viceversa, and means for the back and forward movement thereof.

9. A cutting machine as defined in claim 8, wherein said holding assembly comprises a supporting arm (90); a pivoting member (91); two arms (100) pivoted about said member (91) and having each a nail (107) under the form of a feline nail with ends (107A) having a circular cross section and brackets or heads (100) with rounded ends subjected to the action of a tension spring (101); an axially moveable member carrying a frusto-conical cam (102), 102A) placed between said rounded ends and able to approach them each other in a first position and to separate them in a second position; and a cylinder and piston assembly (105) driving said cam (102, 102A); the component parts being arranged such that when the two heads (100) are near each other the two arms does not hold the workpiece (10Dx, 10Sx), and when the heads (100) are spaced from each other the two arms hold tightly the workpiece.

10. A cutting machine as defined in claim 8, wherein said drive and supporting assembly of said holding device is comprised of a hinge and sliding rod (82); a sliding rod (84); two arms (83) connecting said rod; a rotating arm (85) of said second rod (84) about the first rod (82) and the relative cylinder and piston drive assembly (86); a carriage (87) slideable on said first rod (82) and carrying said arm (90) and a cylinder and piston assembly driving said carriages (87).

11. A cutting machine as defined in claim 1, wherein each cutting assembly is comprised of a disc blade (20L1, 20L2, 20L3); an electrical motor (21A, 21B, 21C) driving said blade; a drive (22A, 22B, 22C); a carriage (23A, 23B, 23C) moving between a retracted position and an advanced position in which said blades (20L1, 20L2, 20L3) cut said coarse workpieces.

12. A cutting machine as defined in claim 11, wherein one of said blades (20L3) is perpendicular to the other two blades (20L1, 20L2).

FIG.1

FIG.2

FIG.4

FIG.3a

FIG.3

FIG.5

FIG.6

EP 0 371 936 A2

FIG.8

FIG.9

FIG.10

FIG.11

FIG.12

FIG.13

FIG.14

FIG.15

FIG.16

FIG.17

*FIG.18*

70 →

71

80 B

90

*FIG.19*

90

88

87

82

84

83

71

70 →

*FIG.20*

① ②

③

*FIG.21*

80 B

FIG.7

FIG.23

FIG.22

FIG.24

FIG 25

FIG 26